## Europäisches Patentamt
## European Patent Office
## Office européen des brevets

(11) Veröffentlichungsnummer: **0 216 103**
**B1**

(12) # EUROPÄISCHE PATENTSCHRIFT

(45) Veröffentlichungstag der Patentschrift:
26.04.89

(51) Int. Cl.⁴: **B23K 15/00**

(21) Anmeldenummer: **86111081.5**

(22) Anmeldetag: **11.08.86**

(54) Elektronenstrahlschweissverfahren für Kupfer.

(30) Priorität: **21.08.85 DE 3529925**

(43) Veröffentlichungstag der Anmeldung:
**01.04.87 Patentblatt 87/14**

(45) Bekanntmachung des Hinweises auf die Patenterteilung:
**26.04.89 Patentblatt 89/17**

(84) Benannte Vertragsstaaten:
**CH DE FR GB LI**

(56) Entgegenhaltungen:
**CH-A- 588 916**
**US-A- 4 134 001**

**SCHWEISSEN UND SCHNEIDEN, Band 23, Nr. 7,
Seiten 274-277, Düsseldorf; H. BANDOW "Beitrag zum
Verbinden von Aluminium mit Kupfer durch
Elektronenstrahlschweissen"
PATENT ABSTRACTS OF JAPAN, Band 7,
Nr. 20 (M-188)[1165], 26. Januar 1983**

(73) Patentinhaber: **INTERATOM Gesellschaft mit
beschränkter Haftung, Friedrich-Ebert-Strasse,
D-5060 Bergisch-Gladbach 1(DE)**

(72) Erfinder: **Iversen, Klaus, Sperberweg 15,
D-5067 Kürten-Bechen(DE)**

(74) Vertreter: **Mehl, Ernst, Dipl.-Ing. et al, Postfach 22 13 17,
D-8000 München 22(DE)**

## Beschreibung

Die vorliegende Erfindung betrifft ein Verfahren zum Herstellen von Bauteilen aus technisch reinem und niedrig legiertem Kupfer z.B. nach DIN 1787 mit Hilfe des Elektronenstrahlschweißverfahrens, wobei diese Bauteile nach dem Schweißen mit Temperaturen von ca. 300–500°C behandelt werden müssen, wie es z.B. für Hart- und Hochtemperaturlöten dieser Bauteile erforderlich ist. Bei solchen Bauteilen aus technisch reinem Kupfer, wie z.B. SE-Cu, SW-Cu oder SF-Cu nach DIN 1787 hat sich herausgestellt, daß diese Bauteile nach dem Elektronenstrahlschweißen, insbesondere mit der aus anderen Gründen sehr wünschenswerten geringen Nahtbreite, und anschließender Wärmebehandlung im Bereich von ca. 300–500°C in erheblichem Ausmaße zur Warmsprödigkeit neigen. Es wurden z.B. Brucheinschnürungen von weniger als 5% gemessen, d.h. die Elektronenstrahlschweißnähte dürfen in diesem Temperaturbereich nicht eingesetzt werden, noch einer nennenswerten Spannung bei einer dem Schweißen folgenden Wärmebehandlung ausgesetzt werden. Damit ist z.B. das Hart- und Hochtemperaturlöten von Kupferbauteilen nach dem Elektronenstrahlschweißen praktisch auszuschließen, es sei denn, die Aufheiz- und Abkühlphasen sind so zu wählen, daß die Wärmespannungen kleiner als 30 N/mm² in den oben angegebenen Temperaturbereichen bleiben.

Aufgabe der vorliegenden Erfindung ist ein Verfahren zum Herstellen von Bauteilen aus Kupfer mit Hilfe des Elektronenstrahlschweißverfahrens und anschließender Wärmebehandlung, das die bisher dabei beobachtete Wärmesprödigkeit erheblich verringert.

Zur Lösung dieser Aufgabe wird ein Verfahren nach dem 1. Anspruch vorgeschlagen.

Im 2. Anspruch wird ein Hinweis gegeben für einen zweckmäßigen Anteil im Bereich der Schweißnaht.

Im 3. und 4. Anspruch wird je eine Möglichkeit angegeben, wie der gewünschte Anteil erreicht werden kann.

Durch diese metallurgischen Maßnahmen gelingt es, wesentlich duktilere Schweißnähte für den gefährdeten Temperaturbereich zu erreichen, z.B. steigt die Brucheinschnürung von ca. 5% bei 500°C etwa auf das 10fache. Damit ist es möglich, alle üblichen Wärmebehandlungen nach dem Schweißen durchzuführen. Dies ist besonders wichtig für aushärtende Kupfer-Legierungen wie z.B. CuCrZr, die zum Lösungsglühen bei 980°C in Wasser abgeschreckt werden und anschließend bei 460°C über sechs Stunden ausgehärtet werden.

Aus der Literatur sind Kupfer-Legierungen bekannt, die mit Rücksicht auf höhere Festigkeit einen Silberanteil von 0,1% enthalten, wie z.B. CuAg0,1 mit der Werkstoffnummer 2.1203 nach DIN 17666, Seite 2. Diese haben aber andere Nachteile, die bei den bevorzugten Anwendungsfällen stören können, z.B. eine schlechtere Wärmeleitfähigkeit.

## Patentansprüche

1. Verfahren zum Herstellen von Bauteilen. aus technisch reinem und niedrig legiertem Kupfer z.B. nach DIN 1787 mit Hilfe des Elektronenstrahlschweißverfahrens und anschließender Wärmebehandlung bei Temperaturen von ca. 300–500°C, dadurch gekennzeichnet, daß der Bereich der Elektronenschweißnaht vor dem Schweißen mit Silber angereichert wird.

2. Verfahren nach Anspruch 1, dadurch gekennzeichnet, daß die Schweißnaht nach dem Schweißen ca. 0,1% Silber enthält.

3. Verfahren nach Anspruch 1 mit einer Nahtbreite der Elektronenschweißnaht von ca. 2 mm, dadurch gekennzeichnet, daß im Schweißbereich, vor dem Schweißen eine Silberfolie mit einer Schichtdicke von ca. 0,2 mm aufgelegt wird.

4. Verfahren nach Anspruch 1 mit einer Nahtbreite der Elektronenschweißnaht von ca. 2 mm, dadurch gekennzeichnet, daß das eine oder beide Bauteile im Bereich der Schweißnaht vor dem Schweißen galvanisch versilbert wird mit einer Schichtdicke, die insgesamt ca. 0,2 mm beträgt.

## Claims

1. Method of manufacturing components of technically pure and weakly alloyed copper, eg. according to DIN 1787, with the aid of electron beam welding and subsequent heat treatment at temperatures of approximately 300–500°C, characterised in that the region of the electron welding seam is enriched in silver before welding.

2. Method according to claim 1, characterised in that the welding seam contains approx. 0.1% silver after welding.

3. Method according to claim 1 with a seam width of the electron welding seam of approx. 2 mm, characterised in that a silver foil is laid in the welding region, before welding, having a layer thickness of approximately 0.2 mm.

4. Method according to claim 1 with a seam width of the electron welding seam of approx. 2 mm, characterised in that before welding one or both components are galvanically silver-plated in the region of the welding seam with a layer thickness which is approx. 0.2 mm.

## Revendications

1. Procédé de fabrication d'éléments constitutifs en cuivre techniquement pur et en cuivre faiblement allié, par exemple suivant la norme DIN 1787, à l'aide du procédé de soudage par bombardement électronique et d'un post-traitement thermique à des températures de 300 à 500°C environ, caractérisé en ce qu'il consiste avant le soudage, à enrichir en argent la zone de soudage par bombardement électronique.

2. Procédé suivant la revendication 1, caractérisé en ce qu'après le soudage le cordon de soudure contient 0,1% d'argent environ.

3. Procédé suivant la revendication 1, ayant une largeur du cordon de soudage par bombardement électronique de 2 mm environ, caractérisé en ce qu'il consiste à appliquer, dans la zone de la soudure et avant le soudage, une feuille d'argent d'une épaisseur de 0,2 mm environ.

4. Procédé suivant la revendication 1, avec une largeur du cordon de soudage par bombardement électronique de 2 mm environ, caractérisé en ce qu'il consiste à argenter par électrolyse, avant le soudage, l'un des éléments constitutifs ou les deux éléments constitutifs, dans la zone du cordon de soudure, avec une épaisseur de couche qui est égale au total à 0,2 mm environ.